# EUROPEAN PATENT APPLICATION

(11) **EP 2 658 052 A1**
(43) Date of publication of application: **30.10.2013**
(21) Application number: 12002832.9
(22) Date of filing: 23.04.2012
(51) Int. Cl.: H02B 1/01, F16B 5/02, F16B 39/24

(54) **Cover metal-sheet for the use in medium and high voltage switchgears, and method of making the same**

(71) Applicant: ABB Technology AG, 8050 Zürich (CH)
(72) Inventor: Klaska, Arne, Dr., 40235 Düsseldorf (DE); Gentsch, Dietmar, Dr.-Ing., 40882 Ratingen (DE); Fan, Zhenhua, Dipl.-Ing., 45145 Essen (DE)
(74) Representative: Schmidt, Karl Michael

(57) **Abstract**

The invention relates to a cover metal-sheet for the use in medium and high voltage switchgears, by which the metal sheet is applied with openings for inserting srewed connections, and a method of making the same, according to the preamble of claim 1 and 5.

In order to integrate shaped spring elements with defined force/deformation characteristics in sheet parts in order to reduce needed parts, and save time of manufacturing, the openings are deformed in the direction antipodal and/or in the same direction to the screwing direction and that the area around the opening is treated by hardening and tempering in that way, that the implemented deformed and hardened area around the opening is an integrated spring element.

## Description

The invention relates to a cover metal-sheet for the use in medium and high voltage switchgears, by which the metal sheet is applied with openings for inserting srewed connections, and a method of making the same, according to the preamble of claim 1 and 4.

For the use of solid connections between parts with mechanical clamping elements like screws spring washers are often used in order to balance relaxation or creepage of single parts during service.

**In** this case the applied pre-load from screw is provided only within a very narrow window of deformation according to a high stiffness of materials. Furthermore spring elements (e.g. spring washers) reduce the sensitivity of the connections to deformation of single parts. This widen the window of deformation by reducing the stiffness of the connection geometrically. The force deformation ratio of screw- or spring-washer-assembly is reduced compared to screw without spring washer.

Disadvantages of such well known constructions are, that the number of parts increases, and that causes higher assembly time/costs. Furthermore the spring washer geometry is given by standardization, as well as the spring washer deflection characteristic by standard materials, and by standard geometry.

Therefore it is an object of the invention, to enhance the mechanical fixation of cover metal sheets, in order to reduce needed parts, and save time of manufacture and overcome geometric constraints.

So the invention is, that the openings are deformed in the direction antipodal or in the same direction to the screwing direction and that the area around the opening is treated by hardening and tempering in that way, that the implemented deformed and hardended area around the opening is an integrated spring element.

According to a method of manufacturing this metal-sheets the invention is, that in a first step the openings are formed in the direction antipodal to the screwing direction, by hydroforming, or deep drawing, or machining,
and that in a second step, the area around the opening is treated by hardening and tempering in that way, that the implemented deformed and hardended area around the opening is an integrated spring element.

The technological benefits from this invention are the following:

A reduced number of parts since separate spring parts (e.g. spring washers) are not necessary for the aforesaid use.

In consequence a faster and simplified assembling and therefore reduced costs in production.

According to that number of failures during assembling are reduced.

Further embodiments are, that the opening with the hardended area is used as mechanical interconnection element for a construction of a closed housing or other application in medium or high voltage application.

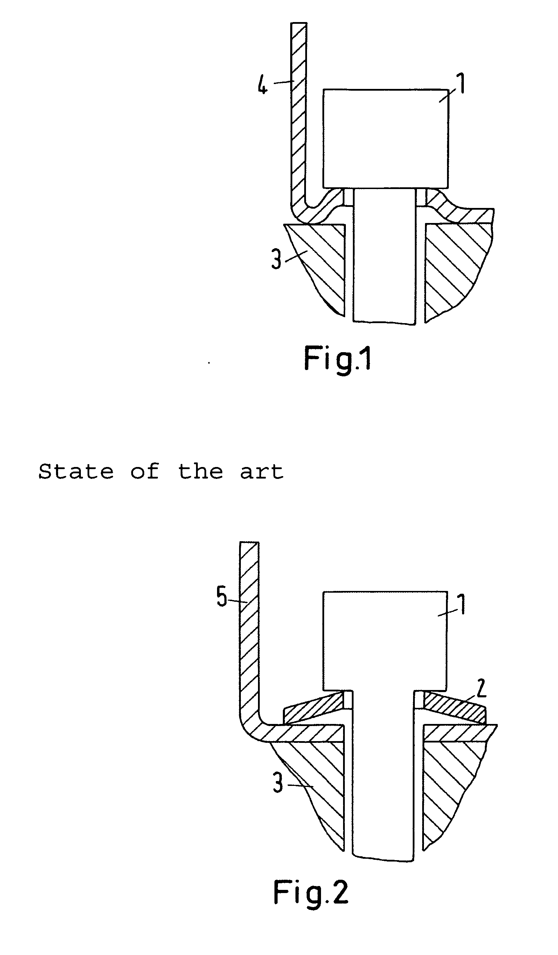

An embodiment of the invention is shown in Figure 1.

Figure 1 shows in detail a part of cover metal sheet 4 for example for a housing for a switchgear. There is shown a part of metal-sheet 4, with a section which contains an opening. This section of the metal sheet is bended in an angle of 90° in such a way, that the opening is being aligned with an opening of a clamping part, so that a screw 1 is guided trough that opening in the sheet and will be screwed into the opening of the clamping part 3, so that the metal-sheet is fixed there.
Normally, that means in the state of the art, a spring element is used between the head of screw and the opening in the metal-sheet.

The invention is, that no spring element or spring disc is needed, because the opening of the metal sheet is treated in such a way, that it is deformed around the opening by hydroforming or deep-drawing or machining, that the inner borderline of the opening is deformed antipodal to the screwing direction.
Furthermore the opening is treated by hardening and tempering or anealing in that way that at least the region of deformation is hardened.
This implements the functionality of a spring disc or spring washer as an integrated element/feature of the conver sheet in region of the opening.

Such a cover sheet can be used for example for a lower terminal of a pole part and/or vacuum circuit breaker for medium voltage switchgears, and or switchgear housings.

Figure 2 shows a mechanical connection from the state of the art. The sheet 5 has only a flat opening, through which a screw 1 will be inserted, so that the screw can be screwed into a clamping part 3, in order to fix the sheet 5 to that clamping part 3.
To fix that screwed connection a spring ring 2 is usually used, which will be deformed elastically against the implemented spring force.

With this well know connection a separate part, the spring ring is necessary, which makes the manufacture complicate, especially in that cases when the the location of the connection is hidden and manualy not easy to handle.

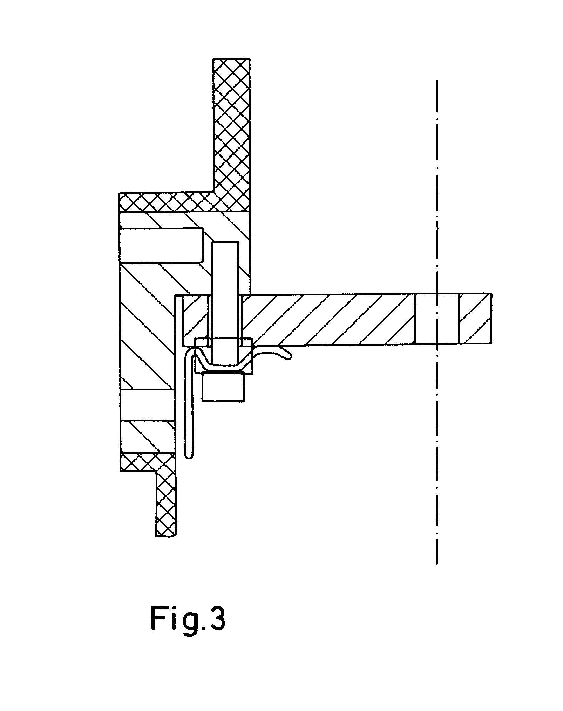

Figure 3 shows an application of the invention for fixing a coversheet with the integrated spring element to a flexible conductor of a pole part of a medium voltage switchgear. The used screw is screwed into the lower terminal. By the us of the integrated spring element the cover sheet can be fixed without the separate use of a spring washer element.

In contrast to that, the invention don't have further need of such separate spring ring.
This results in a lot of advantages
So for the invention, the following can be functionally concluded:

### Manufacturing

The integrated spring washer is manufactured by hydroforming, deep drawing, machining.

### Materials

Steel is necessary for direct replacement of spring washer.
Therefore hardening and tempering is necessary for the aforesaid desired materials properties.

Further materials are feasible dependent on required force/deformation characteristic, like described by the required function.

### Geometry

- provides connection surface for screw
- provides defined height for balancing function (force / deformation characteristic)
- geometry adjustable to geometric constraints
- force / deformation ratios adjustable
- reduce number of parts (skip spring washer)

Additional Advantages are,
- mechanical protection against penetrating of parts into the pole part,
- heat sink feature due to direct contact to flexible conductor in pole part
- dielectric field control of the sheet, in the application of dielectrically stressed parts.

## Claims

1. Cover metal-sheet for the use in medium and high voltage switchgears, by which the metal sheet is applied with openings for inserting screwed connections,
**characterized in,**
**that** the openings are deformed in the direction antipodal to the screwing direction and that the area around the opening is treated by hardening and tempering in that way, that the implemented deformed and hardended area around the opening is an integrated spring element.

2. Cover sheet according to claim 1,
**characterized in,**
**that** the opening with the hardened area is used as mechanical interconnection element for a construction of a closed housing.

3. Cover sheet according to claim 1,
**characterized in,**
**that** the opening with the hardened area is used as mechanical interconnection element for an interconnection of parts of a pole part in medium or high voltage switchgears.

4. Cover sheet according to claim 2,
**characterized in,**
**that** the housing is applied as housing for low-, or medium-, or high-voltage switchgears.

5. Method of manufacturing of cover metal-sheet with integrated openings for mechanical interconnection to each other by screws, for the use of metal housing for low-, medium- or highvoltage switchgears,
**characterized in**
**that** in a first step the openings are deformed in the direction antipodal or in same direction to the screwing direction, by hydroforming, or deep drawing, or machining,
and **that** in a second step, the area around the opening is treated by hardening and tempering in that way, that the implemented deformed and hardended area around the opening is an integrated spring element.
